Europäisches Patentamt

(19) European Patent Office

Office européen des brevets

(11) Publication number: **0 050 666**
**B1**

# EUROPEAN PATENT SPECIFICATION

(45) Date of publication of patent specification: **01.10.86**

(21) Application number: **81901339.2**

(22) Date of filing: **09.04.81**

(86) International application number:
**PCT/US81/00479**

(87) International publication number:
**WO 81/03224 12.11.81 Gazette 81/27**

(51) Int. Cl.⁴: **G 01 N 33/48**, G 01 N 21/05,
G 06 K 9/20

(54) **FLOW-THROUGH OPTICAL ANALYZER.**

(30) Priority: **02.05.80 US 146064**

(43) Date of publication of application:
**05.05.82 Bulletin 82/18**

(45) Publication of the grant of the patent:
**01.10.86 Bulletin 86/40**

(84) Designated Contracting States:
**FR**

(56) References cited:
**DE-A-2 656 263**
**US-A-2 791 150**
**US-A-3 822 095**
**US-A-4 075 462**
**US-A-4 097 845**

**REVIEW OF SCIENTIFIC INSTRUMENTS,
volume 49, no. 12, December 1978 NEW YORK
(US) W. EISERT et al. "Internal calibration to
absolute values in flow through particle size
analysis" pages 1617-1621**

(73) Proprietor: **INTERNATIONAL REMOTE
IMAGING SYSTEMS, INC.
9232 Deering Avenue
Chatsworth, CA 91311 (US)**

(72) Inventor: **BOLZ, Gunner
435 10th Street
Del Mar, CA 92104 (US)**
Inventor: **DEFOREST, Sherman, E.
1127 Cornish Drive
Encinitas, CA 92024 (US)**

(74) Representative: **Bernhardt, Klaus et al
Radeckestrasse 43
D-8000 München 60 (DE)**

Courier Press, Leamington Spa, England.

# Description

This invention relates to a method of analyzing particles in a fluid, an apparatus for carrying out this method as well as a flow cell for use in the method or the apparatus.

Substantial advances have been made in automating the job of counting blood cells in a serum sample. The most well-known instrument for performing blood counts is the so-called Coulter counter in which blood cells are passed in single file through an orifice and detected and counted by the manner in which they change the electric properties at the orifice. Up until the present time, however, there has been no automated equipment available for analyzing and evaluating multiple cells, such as, normal cells, target cells, sickle cells, etc. which may be found in a flowing stream of a given blood sample. U.S.—A—4,097,845 suggests an apparatus for classifying and differentiating different cells. However, that patent teaches using a microscopic slide. Thus, where multiple cell information of this type is desired, the standard commercial way of obtaining it is by preparing a microscope slide with the cells fixed on an image plane and having a human operator or pattern recognition machine count statistically significant numbers of the cells as the cells are observed one-at-a-time on the slide through a microscope.

Some attempts have been made in recent years to provide optical analysis of particles flowing in a flow stream. For instance, Kay, et al., *Journal of Histochemistry and Cytochemistry,* Volume 27, page 329 (1979) shows a Coulter type orifice for moving cells in single file with the cells magnified on a vidicon. Additionally, Kachel, et al., *Journal of Histochemistry and Cytochemistry,* Volume 27, page 335, shows a device for moving cells in single file through a microscopic area where they are photographed. While these workers have done some work in automating particle analysis in single file no successful work has been reported where automated particle analyses was accomplished in a flowing stream without the requirement of arranging the particles into a single file stream. See for instance *Flow Cytometry and Sorting* Melanded et al, John Wiley & Sons 1979, Chapter 1.

There is known an apparatus including a flow cell for measuring certain characteristics of particles suspended in a fluid, such a volume and/or fluorescence characteristics, necessitating flow of the particles in a single file as otherwise measurement of characteristics of individual particles — to be distinguished from optical analysis thereof — would not be possible, see DE—A—26 56 263. This known apparatus comprises a body, said body having a passageway extending therethrough from an inlet to an outlet, said inlet comprising an inlet member for introduction of the fluid containing particles to be examined and an inlet aperture for introduction of envelope fluid, such that the initial path of flow of particles in said passageway is surrounded by an envelope of fluid, said passageway including, intermediate said inlet and said outlet, a portion allowing examination by imaging means of fluid and particles in said passageway, said portion having a width greater than its thickness, said thickness being chosen to be greater than the maximum expected thickness of particles to be examined, said passageway tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion.

Further there is known a method and an apparatus for analyzing particles in the fluid in which images of particles in the fluid are focused onto an array of light sensitive electronic elements, wherein each of said images and particles therein is analyzed, the output of said array of light sensitive electronic elements being connected to electronic processors for evaluating the images output from this array, see US—A—4 075 462.

Further there is prior known a technique for determining the red blood cell count in which a ribbon-like stream of blood is flowing past apertures in a flow cell forming the ribbon-like stream, photocell means being provided to provide the desired count, see US—A—2 791 150.

It is the object of the present invention to analyze particles in a flowing or moving fluid sample, such as blood, in the sense that it is desired to identify particles having different characteristics, such as size, to provide counts of the various particle types, and to be able to distinguish two cells flowing together.

One aspect of the invention consists in a method of analyzing particles in a fluid comprising

— supplying particle-containing fluid and envelope fluid to the inlet of a flow cell comprising a body, said body having a passageway extending therethrough from said inlet to an outlet, said inlet comprising an inlet member for introduction of the fluid containing particles to be examined and an inlet aperture for introduction of the envelope fluid, such that the initial path of flow of particles in said passageway is surrounded by an envelope of fluid, said passageway including, intermediate said inlet and said outlet, a portion allowing examination by imaging means of fluid and particles in said passageway, said portion having a width greater than its thickness, said thickness being chosen to be greater than the maximum expected thickness of particles to be examined, said passageway tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion,

— focussing an imaging means on the particles passing through said examination portion, and

— controlling the flow characteristics by adjusting the pressures of said supplied fluids and is characterized in that

— the body is of generally elongate, planar form, with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time,

and by

— converting the output of said imaging means into a series of still frame images, and

— analyzing each of said images and the particle images therein.

Another aspect of the invention consists in an apparatus comprising:

means for supplying particle-containing fluid and envelope fluid; imaging means and

a flow cell comprising a body, said body having a passageway extending therethrough from an inlet to an outlet, said inlet comprising an inlet member for introduction of the particle-containing fluid and an inlet aperture for introduction of the envelope fluid, such that the initial path of flow of particles in said passageway is surrounded by an envelope of fluid, said passageway including, intermediate said inlet and said outlet, a portion allowing examination by said imaging means of fluid and particles in said passageway, said portion having a width greater than its thickness, said thickness being chosen to be greater than the maximum expected thickness of particles to be examined, said passageway tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion and is characterized in that the body is of generally elongate, planar form, with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time, and in that the imaging means is connected to an electronic processor arranged to convert the output of the imaging means into a series of still frame images, and to analyse each of said images and the particle images therein.

A third aspect of the invention consists in a flow cell comprising a body, said body having a passageway extending therethrough from an inlet to an outlet, said inlet comprising an inlet member for introduction of the fluid containing particles to be examined and an inlet aperture for introduction of envelope fluid, such that the initial path of flow of particles in said passageway is surrounded by an envelope of fluid, said passageway including, intermediate said inlet and said outlet, a portion allowing examination by imaging means of fluid and particles in said passageway, said portion having a width greater than its thickness, said thickness being chosen to be greater than the maximum expected thickness of particles to be examined, said passageway tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion, and which is characterised in that the body is of generally elongate, planar, form with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time.

Thus with the invention there is provided a method, apparatus and flow cell for moving a fluid sample through a controlled flow path where the particles in the sample are confined to a shallow but broad imaging area which is on the order of the depth of the particles and many times wider than the particles. The stream of particles in the imaging area is magnified and a series of still frame images of the particles are prepared and then combined to generate measures of the cell content of the original flow stream. In this way more than one particle can be examined in a single field, and different particles can be optically distinguished with a number of important advantages. For instance, two cells flowing together can be optically recognized whereas a Coulter counter could recognize them as a single double-sized cell.

While in the prior art, as represented by US—A—4 075 462, translation of the images of particles into digital data, and analysis of the data by digital logic to obtain particle counts, size, shape and other physical characteristics, has been contemplated, the full potential of digital processing has not been recognized. In accordance with one especially advantageous embodiment of the invention the obtained still frame images are enhanced with known digital enhancement techniques. Such enhancement techniques have been developed for satellite pictures and are much more powerful than simple accumulation by means of interim storage in the light sensitive array itself as contemplated in the prior art. Notable examples of such enhancement techniques are greyscale transformations and edge tracing programs.

The enhancement techniques may include the step that information from multiple still frame images is combined to provide composite information reflecting the content of the multiple still frame images and/or predetermined reference images.

Summarizing, once a series of still frame images is prepared in digital form, a wide variety of very sophisticated information can be obtained about the particles in the series of images depending upon the complexity of computer equipment and software which may be used for analysis of the images. With other words, the invention may be used for analysis of a variety of optically perceptible particles moving in a stream, both biological particles, such as cells in blood or cells, bacteria, casts and crystals in urine or particles in gas analyzers, etc., and the output of these measurements may be employed for process control, such as dispensing nutrients into a stream containing microorganisms as mentioned above, the control of the growth of polymers and crystals, etc.

The information which is provided may be correlated readily to the original volume of blood sample from which the still frame images are made by a variety of methods to calibrate the results for both particle size and concentration. For instance calibration may be accomplished by adding calibrator particles to the original blood sample in a known concentration so that the calibrator particles may be counted independently of the normal blood cells to provide volume calibration for the normal blood cells. Alternatively, calibration may be accomplished by providing a cross-hatch of fixed dimension in the field of view.

In the apparatus of the invention, and in particular the flow cell of the invention, the flow stream of particles is provided in a flow chamber which moves the particles in a stream which is approximately the thickness of the thickest particles and many times wider than the widest particles, for instance more than one hundred times as wide as the widest particles. In the prior art hydrodynamic forces of flowing fluids have been utilized for hydrodynamic focussing the particles into a single file, but with the design of the apparatus and flow cell of the invention these hydrodynamic forces are used first to orient the particles in the desired manner, and subsequently to distribute them in the plane of the passageway; the flow characteristics in the passageway being controlled in the same manner as in the prior art by adjusting the fluid pressure in the sample, and the envelope fluid, respectively. In this manner it can be achieved that the flow stream in the imaging area has a cross-sectional area of minimum shear which is not substantially larger than the minimum cross-sectional area of the particles whereby the particles are aligned in the flow stream with their minimum cross-sectional area extended transverse to their direction of flow. The term "minimum shear" is used herein to mean "minimum velocity gradient" so that a particle moving in the stream tends to align itself with the direction of the stream much as a log floating down a river will align itself with the direction of flow where there is a flow gradient.

In accordance with a special embodiment of the apparatus of the invention a controller means may be coupled to the processor means for altering the condition of the fluid in response to analysis by the processor.

Generally, the still frames obtained by the method of the invention may be stored in analog form, but if the enhancement is to be carried out on-line, it is preferred that such imaging means is connected to means for storing at least one of the still frame images at a time in digital form.

In a preferred embodiment of the apparatus of the invention the area of the passageway in said examination portion is at least one hundred times the area of the largest particles to be analyzed.

Brief Description of Drawings

These and other features of the invention will become apparent from the following description of a preferred apparatus practicing the invention in which:

Fig. 1 is a perspective view of apparatus for examining a flow stream in accordance with this invention.

Fig. 2 is a plan view of the flow chamber in Fig. 1.

Fig. 3 is a cross-sectional view of the apparatus of Fig. 2 taken on the plane indicated at 3—3.

Fig. 4 is a schematic diagram of the electronic processor employed by the apparatus of Fig. 1.

Best Mode for Carrying Out the Invention

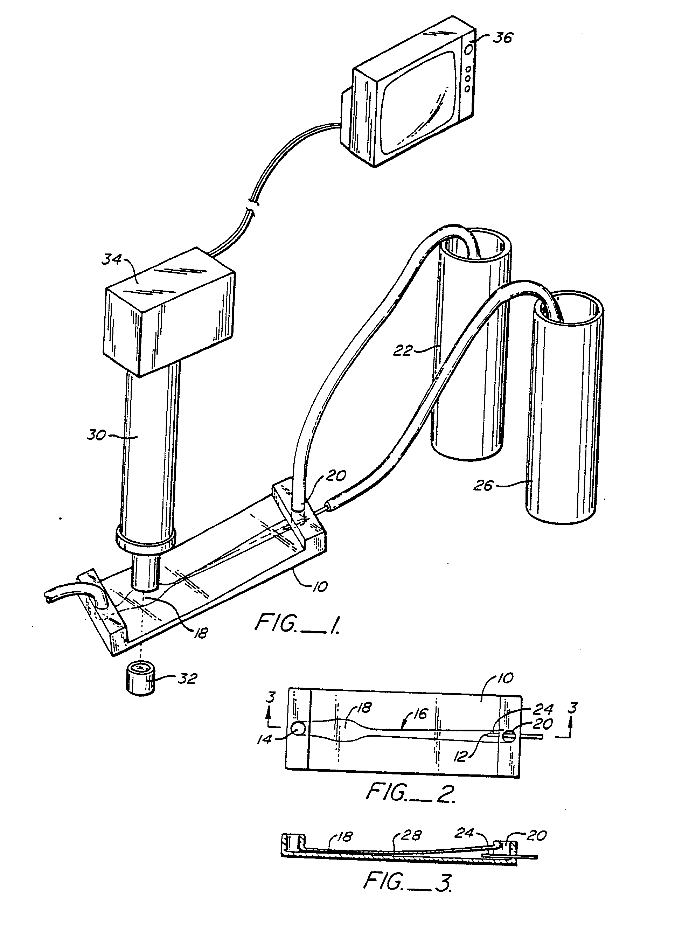

Referring now in detail to the drawings, and particularly to Fig. 1, the apparatus shown therein includes a body 10 containing a flow chamber having an inlet 12 for a blood sample and an outlet 14 with a passageway 16 extending between them past an imaging area 18. The passageway 16 has an inlet with a conduit 20 adapted to be connected to a volume of saline solution 22. As illustrated in Figs. 2 and 3, the inlet 12 for the blood sample has a needle 24 in the passageway 16 downstream from the conduit 20 with the needle 24 connected to a container 26 adapted to hold the blood sample to be analyzed.

The cross-sectional area of the passageway 16 becomes progressively smaller as the passageway extends from the blood inlet 12 to the imaging area 18 while at the same time the passageway 16 becomes much shallower. From the entrance to the imaging area 18 to the outlet 14 there is an increase in width in the passageway 16. Thus, as illustrated in Figs. 2 and 3 the passageway 16 has a width and depth of about 5,000 microns at the blood inlet 12 and a width and depth of about 500 microns at midpoint 28, and a depth of 100 microns with a width exceeding 5,000 microns at the examination area 18.

It will be appreciated that the flow stream through the examination area 18 is many times deeper than the largest cells which have a maximum dimension of about 20 microns, but with the flow passageway shaped in this way the blood stream entering through the opening 12 is confined to a stable flow path of minimum shear in the examination area 18, and the disc-like cells are oriented in that area with their maximum cross-sectional area visible in the plane of Fig. 2. The flow characteristics in the passageway 16 may be controlled by adjusting the fluid pressure in containers 22 and 26 either automatically or by adjusting the static heights thereof.

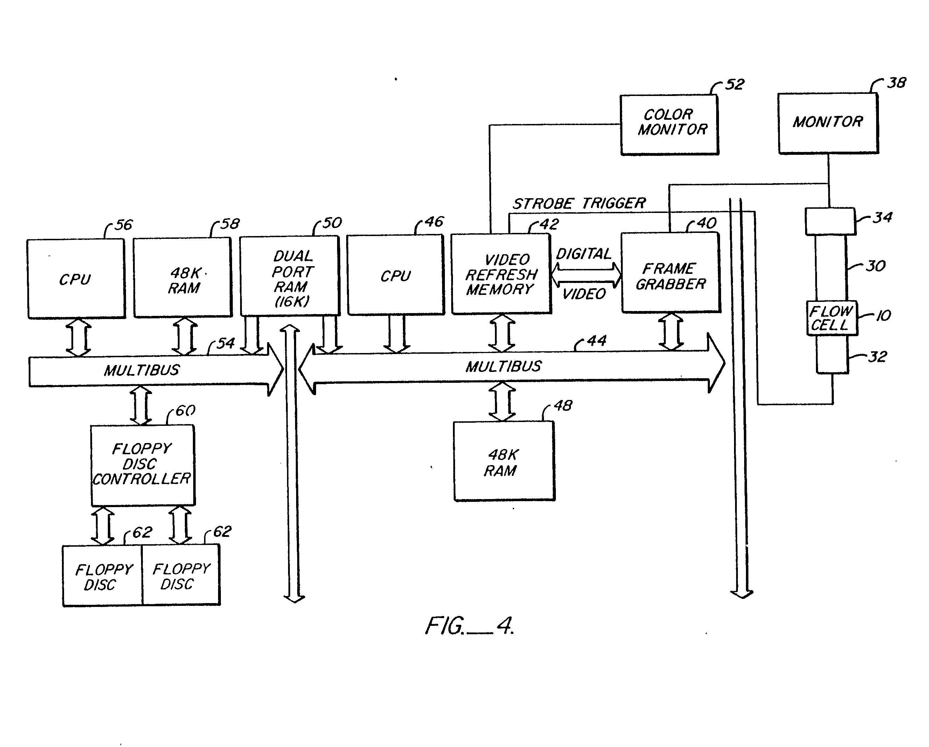

A microscope 30 is focused on the examination area 18 and the examination area 18 is illuminated from below by a strobe light 32 which is preferably a U.S. Scientific Instrument Corporation Model 3018 containing a 2UP1.5 lamp. The output of the microscope 30 is focused on a CCD camera 34 which is preferably a CCD camera model number TC1160BD manufactured by RCA. The output of the CCD camera is converted to a series of still frame images, and suitable electronic processors are employed for evaluating those images. One processor which may be employed is the processor marketed as Image Analysis System Model C-1285 by Hamamatsu Systems, Inc., Waltham, Massachusetts. Preferably the output of the CCD camera is connected to an electronic processor 36 which is illustrated in greater detail in Fig. 4 and includes a black and white television monitor 38 and a frame grabber 40 which stores still frame images of the subject viewed by the CCD camera. The frame grabber is preferably a Model FG08 frame grabber made by the Matrox Corporation of Montreal, the output of which is supplied to a video refresh memory 42 Model RGB 256 made by Matrox Corporation which are both coupled to the multibus 44 of the central processing unit 46 which is preferably an Intel 80/20 computer. The multibus is also coupled to a 48K random access memory 48 of Electronic Solutions, Inc., and a 16K dual port random access memory 50 Model RM 117 of Data Cube Corporation. The output of the video refresh memory is also coupled to a color monitor 52 which may be used to provide digitally enhanced video images of individual still frames for human examination.

The second output of the dual port ram 50 is connected to a multibus 54 which is connected to an Applied Micro Devices central processing unit 56, a 48K random access memory of Electronic Solutions, Inc. 58 and removable storage in the form of a floppy disc controller 60, such as an Advanced Micro Devices Model 8/8 and two units of Shugart floppy disc storage 62.

A wide variety of programming may be employed for processing pictures with the apparatus of Fig. 4 depending upon the particular task which user wishes to perform.

As mentioned above, the programming of the Hamamatsu System 1285 may be employed. Preferably, however, the programming is performed as follows:

The tasks are first divided into those which must address each pixel in a given image and those which only address a small subset of the total. Since much time will be spent in the first class of tasks, they are programmed in assembly language on the interface processor 46 (the Intel 80/20 in Fig. 4). The output of these operations are then transferred to the host machine 56 via the dual ported ram 50. On the host side almost all of the necessary programming is more suitably done in a high level language such as Pascal (BASIC or FORTRAN could in principal be used also). The types of tasks that are done in the assembly language includes greyscale transformations, convolutions, and greyscale histogram calculations. The types of tasks done on the host side include overall control of the other devices, identification and segmentation of object of interest in the field of view, calculation of parameters associated with objects thus found, and formatting the output of results. Another way of considering this separation of tasks in this fashion is that tasks which must be performed at speeds great compared to a human operator are done in assembly. Tasks which are either complicated or which can operate at less than the maximum speed can be programmed in the higher language. Objects are found in a field of view primarily by setting a greyscale window function for values known to be characteristic of the desired object. These values can be established by prior knowledge or by well-known histogram techniques. When a pixel belonging to an object has been located in the field of view, an edge tracing program is invoked to outline the whole object associated with that pixel. Once the edge has been found, then many relevant parameters such as location, area, integrated optical density, and various moments can easily be calculated.

Probability of membership in previously defined subgroups can be determined from these derived parameters by means of standard decision theory. Definitions of blood cell morphology classifications are established by trained observers. These definitions are then used as the basis of the selected algorithms. Accuracy of the method is determined by comparison of machine results with those of trained observers examining the same samples. Output of the results can be programmed to be any of a variety of formats. Histograms, line plots, and tabular summaries are available for particular needs.

**Claims**

1. A method of analysing particles in a fluid, comprising
— supplying particle-containing fluid and envelope fluid to the inlet of a flow cell comprising a body (10), said body having a passageway (16) extending therethrough from said inlet (12, 20) to an outlet (14), said inlet comprising an inlet member (24) for introduction of the fluid containing particles to be examined and an inlet aperture (20) for introduction of the envelope fluid, such that the initial path of flow of particles in said passageway (16) is surrounded by an envelope of fluid, said passageway including, intermediate said inlet and said outlet, a portion (18) allowing examination by imaging means of fluid and particles in said passageway, said portion (18) having a width greater than its thickness, said thickness being chosen to be greater than the maximum expected thickness of particles to be examined, said passageway (16) tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion,

— focussing an imaging means (30, 34) on the particles passing through said examination portion, and

— controlling the flow characteristics by adjusting the pressures of said supplied fluids, characterised in that

— the body is of generally elongate, planar, form, with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time,

and by

— converting the output of said imaging means into a series of still frame images, and

— analysing each of said images and the particle images therein.

2. Method according to claim 1, characterized in that the still frame images are enhanced with known digital enhancement techniques.

3. Method according to claim 2, characterized in that information from multiple still frame images is combined to provide composite information reflecting the content of the multiple still frame images and/or predetermined reference images.

4. Method according to claim 1, 2 or 3, characterized in that calibrator particles are added to the fluid in a known concentration and are counted independently from the particles to be analysed.

5. Method according to claim 1, 2 or 3, characterized in that a cross-hatch of fixed dimension is provided in the field of view.

6. Apparatus for carrying out the method according to any one of claims 1 to 5 comprising:

means for supplying particle-containing fluid and envelope fluid;

imaging means; and

a flow cell comprising a body (10), said body having a passageway (16) extending therethrough from an inlet (12, 20) to an outlet (14), said inlet comprising an inlet member (24) for introduction of the particle-containing fluid and an inlet aperture (20) for introduction of the envelope fluid, such that the initial path of flow of particles in said passageway (16) is surrounded by an envelope of fluid, said passageway including, intermediate said inlet and said outlet, a portion (18) allowing examination by said imaging means of fluid and particles in said passageway, said portion (18) having a width greater than its thickness, said thickness being chosen to be greater than the maximum expected thickness of particles to be examined, said passageway (16) tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion, characterized in that the body is of generally elongate, planar, form, with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time, and in that the imaging means (30, 34) is connected to an electronic processor (36) arranged to convert the output of the imaging means into a series of still frame images, and to analyse each of said images and the particle images therein.

7. Apparatus according to claim 6, characterized by controller means coupled to the processor means (36) for altering the condition of the fluid in response to analysis by the processor (36).

8. Apparatus according to claim 6 or 7, characterized in that said imaging means (34) is connected to means (40) for storing at least one of the still frame images at a time in digital form.

9. Apparatus according to any of claims 6—8, characterized in that the width (18) of the passageway in said examination portion, is at least one hundred times the width of the largest particles to be analysed.

10. A flow cell for use in the method according to any one of claims 1 to 5 or in an apparatus according to any one of claims 6 to 9, comprising a body (10), said body having a passageway (16) extending therethrough from an inlet (12, 20) to an outlet (14), said inlet comprising an inlet member (24) for introduction of the fluid containing particles to be examined and an inlet aperture (20) for introduction of envelope fluid, such that the initial path of flow of particles in said passageway (16) is surrounded by an envelope of fluid, said passageway including, intermediate said inlet and said outlet, a portion (18) allowing examination by imaging means of fluid and particles in said passageway, said portion (18) having a width greater than its thickness, said thickness being chosen to be greater than the maximum expected thickness of particles to be examined, said passageway (16) tapering, from the inlet to the entrance of said examination portion, in both a plane parallel with the width of said examination portion and a plane parallel with the thickness of said examination portion, such that the cross-sectional area of the passageway decreases substantially along the flow path from the flow inlet to the entrance of the examination portion, characterized in that the body is of generally elongate, planar, form with the inlet and outlet at either end, and in that, at the examination portion, the passageway remains at substantially the same thickness, but opens widthwise at the entrance to the examination portion, to form a flat chamber having a width appreciably wider than that of the passageway immediately upstream of said entrance, and wide enough to contain the maximum profile of more than one particle being viewed at the same time.

**Revendications**

1. Un procédé d'analyse de particules dans un fluide, dans lequel:

— on applique un fluide contenant des particules et un fluide enveloppe à l'entrée d'une cellule à écoulement comprenant un corps (10), ce corps comportant un passage (16) qui le traverse depuis l'entrée (12, 20) jusqu'à une sortie (14), cette entrée comprenant un élément d'entrée (24) pour l'introduction du fluide contenant des particules à examiner, et une ouverture d'entrée (20) pour l'introduction du fluide enveloppe, de façon que le chemin d'écoulement initial des particules dans le passage (16) soit entouré par une enveloppe de fluide, ce passage comprenant, entre l'entrée et la sortie, une partie (18) permettant l'examen du fluide et des particules se trouvant dans le passage, à l'aide de moyens de génération d'image, cette partie (18) ayant une largeur supérieure à son épaisseur, cette épaisseur étant choisie de façon à être supérieure à l'épaisseur maximale prévue pour les particules à examiner, ce passage (16) allant en diminuant depuis l'entrée jusqu'à la région d'entrée de la partie d'examen, à la fois dans un plan parallèle à la largeur de la partie d'examen et dans un plan parallèle à l'épaisseur de la partie d'examen, de façon que l'aire de section droite du passage diminue notablement le long du chemin d'écoulement, depuis l'entrée de l'écoulement jusqu'à la région d'entrée de la partie d'examen,

— on focalise des moyens de génération d'image (30, 34) sur les particules qui traversent la partie d'examen, et

— on commande les caractéristiques d'écoulement en réglant les pressions des fluides appliqués,

caractérisé en ce que

— le corps a une forme générale plane et allongée, avec l'entrée et la sortie à chaque extrémité, et en ce que, dans la partie d'examen, le passage conserve pratiquement la même épaisseur, mais il s'élargit dans la région d'entrée de la partie d'examen, pour former une chambre plate ayant une largeur notablement supérieure à celle du passage immédiatement en amont de la région d'entrée, et suffisamment large pour contenir le profil maximal de plusieurs particules observées simultanément,

et en ce que

— on convertit l'information de sortie des moyens de génération d'image en une série d'images fixes, et

— on analyse chacune des images et les images de particules qu'elles contiennent.

2. Procédé selon la revendication 1, caractérisé en ce qu'on améliore les images fixes par des techniques d'amélioration numériques connues.

3. Procédé selon la revendication 2, caractérisé en ce qu'on combine l'information provenant de plusieurs images fixes, pour produire une information composite représentant le contenu des différentes images fixes et/ou d'images de référence prédéterminées.

4. Procédé selon la revendication 1, 2 ou 3, caractérisé en ce qu'on ajoute au fluide des particules d'étalonnage, avec une concentration connue, et on compte ces particules indépendamment des particules à analyser.

5. Procédé selon la revendication 1, 2 ou 3, caractérisé en ce qu'une grille de dimension fixe est placée dans le champ d'observation.

6. Appareil destiné à la mise en oeuvre du procédé selon l'une quelconque des revendications 1 à 5, comprenant:

des moyens destinés à fournir un fluide contenant des particules et un fluide enveloppe;

des moyens de génération d'image; et

une cellule à écoulement comprenant un corps (10), ce corps comportant un passage (16) qui le traverse depuis une entrée (12, 20) jusqu'à une sortie (14), cette entrée comprenant un élément d'entrée (24) destiné à l'introduction du fluide contenant des particules, et une ouverture d'entrée (20) destinée à l'introduction du fluide enveloppe, de façon que le chemin d'écoulement initial de particules dans le passage (16) soit entouré par une enveloppe de fluide, ce passage comprenant, entre l'entrée et la sortie, une partie (18) qui permet l'examen du fluide et des particules se trouvant dans le passage, à l'aide de moyens de génération d'image, cette partie (18) ayant une largeur supérieure à son épaisseur, cette épaisseur étant choisie de façon à être supérieure à l'épaisseur maximale prévue pour les particules à examiner, ce passage (16) allant en diminuant depuis l'entrée jusqu'à la région d'entrée de la partie d'examen, à la fois dans un plan parallèle à la largeur de la partie d'examen et dans un plan parallèle à l'épaisseur de la partie d'examen, de façon que l'aire de section droite du passage diminue notablement le long du chemin d'écoulement depuis l'entrée de l'écoulement jusqu'à la région d'entrée de la partie d'examen, caractérisé en ce que le corps a une forme générale plane et allongée, avec l'entrée et la sortie à chaque extrémité, et en ce que, dans la partie d'examen, le passage conserve pratiquement la même épaisseur, mais il s'élargit dans la région d'entrée de la partie d'examen, pour former une chambre plate ayant une largeur notablement supérieure à celle du passage immédiatement en amont de l'entrée, et suffisamment large pour contenir le profil maximal de plusieurs particules observées simultanément, et en ce que les moyens de génération d'image (30, 34) sont connectés à un dispositif électronique de traitement (36) conçu de façon à convertir l'information de sortie des moyens de génération d'image en une série d'images fixes, et à analyser chacune de ces images et les images de particules qu'elles contiennent.

7. Appareil selon la revendication 6, caractérisé par des moyens de commande connectés aux moyens de traitement (36) pour modifier les conditions du fluide sous la dépendance de l'analyse effectuée par les moyens de traitement (36).

8. Appareil selon la revendication 6 ou 7, caractérisé en ce que les moyens de génération d'image (34) sont connectés à des moyens (40) destinés à enregistrer l'une au moins des images fixes à la fois, sous forme numérique.

9. Appareil selon l'une quelconque des revendications 6—8, caractérisé en ce que la largeur (18) du passage dans la partie d'examen est au moins cent fois supérieure à la largeur des plus grandes particules à analyser.

10. Une cellule à écoulement prévue pour l'utilisation dans le procédé selon l'une quelconque des revendications 1 à 5, ou dans un appareil selon l'une quelconque des revendications 6 à 9, comprenant un corps (10), ce corps comportant un passage (16) qui le traverse depuis une entrée (12, 20) jusqu'à une sortie (14), cette entrée comprenant un élément d'entrée (24) pour l'introduction du fluide contenant des particules à examiner et une ouverture d'entrée (20) pour l'introduction d'un fluide enveloppe, de façon que le chemin d'écoulement initial de particules dans le passage (16) soit entouré par une enveloppe de fluide, ce passage comprenant, entre de l'entrée et la sortie, une partie (18) qui permet l'examen du fluide et des particules se trouvant dans le passage, à l'aide de moyens de génération d'image, cette partie (18) ayant une largeur supérieure à son épaisseur, cette épaisseur étant choisie de façon à être supérieure à l'épaisseur maximale prévue pour des particules à examiner, ce passage (16) allant en diminuant, depuis l'entrée jusqu'à la région d'entrée de la partie d'examen, à la fois dans un plan parallèle à la largeur de la partie d'examen et dans un plan parallèle à l'épaisseur de la partie d'examen, de façon que l'aire de section droite du passage diminue notablement le long du chemin d'écoulement, depuis l'entrée de l'écoulement jusqu'à la région d'entrée de la partie d'examen, caractérisée en ce que le corps a une forme générale plane et allongée, avec l'entrée et la sortie à chaque extrémité, et en ce que, dans la partie d'examen, le passage conserve pratiquement là même épaisseur, mais il s'élargit dans la région d'entrée de la partie d'examen, pour former une chambre plate ayant une largeur notablement supérieure à celle du passage immédiatement en amont de la région d'entrée, et suffisamment large pour contenir le profil maximal de plusieurs particules observées simultanément.

## Patentansprüche

1. Verfahren zum Analysieren von Partikeln in einem Strömungsmittel, bestehend aus
— Zuführen von Partikeln enthaltendem Strömungsmittel und Umhüllungsströmungsmittel zum Einlaß einer Durchflußküvette bestehend aus einem Körper (10), der eine Passage (16) aufweist, die sich von dem Einlaß (12, 20) zu einem Auslaß (14) durch den Körper erstreckt, wobei der Einlaß ein Einlaßelement (24) zur Einführung des die zu untersuchenden Partikel enthaltenden Strömungsmittels und eine Einlaßöffnung (20) zur Einführung des Hüll-Strömungsmittels umfaßt, derart, daß der anfängliche Strömungsweg der Partikel in der Passage (16) von einer Strömungsmittelhülle umgeben ist, wobei die Passage zwischen dem Einlaß und dem Auslaß einen Teil (18) aufweist, die die Prüfung von Strömungsmittel und Partikeln in der Passage durch Abbildungseinrichtungen erlaubt, wobei dieser Teil (18) eine Breite hat, die größer als seine Dicke ist, die so gewählt ist, daß sie größer ist als die erwartete maximale Dicke von zu untersuchenden Partikeln, wobei die Passage (16) sich vom Einlaß zum Eingang des Untersuchungsteils sowohl in einer Ebene parallel zur Breite des Untersuchungsteils als auch einer Ebene parallel zur Dicke des Untersuchungsteils verjüngt, derart, daß die Querschnittsfläche der Passage sich längs des Strömungsweges vom Strömungseinlaß zum Eingang des Untersuchungsteils merklich verringert,
— Fokussierung einer Abbildungseinrichtung (30, 34) auf die durch den Untersuchungsteil hindurchtretenden Partikel, und
— Steuern der Strömungscharakteristiken durch Einstellen der Drucke der zugeführten Strömungsmittel
dadurch gekennzeichnet, daß
— der Körper allgemein längliche, planare Form hat mit dem Einlaß und Auslaß an den Enden und daß am Untersuchungsteil die Passage auf im wesentlichen der gleichen Dicke bleibt, sich aber am Eingang des Untersuchungsteils in der Breitenrichtung öffnet, so daß eine flache Kammer gebildet wird, deren Breite erheblich größer ist als die der Passage unmittelbar stromaufwärts vom Eingang, und breit genug, um das maximale Profil von mehr als einem gleichzeitig betrachteten Partikel aufzunehmen,
und
— Umwandeln des Ausgangs der Abbildungseinrichtung in eine Reihe von Standbildern, und
— Analysieren jedes der Bilder und der darin enthaltenen Partikelbilder.

2. Verfahren nach Anspruch 1, dadurch gekennzeichnet, daß die Standbilder mit bekannten digitalen Aufbereitungstechniken aufbereitet werden.

3. Verfahren nach Anspruch 2, dadurch gekennzeichnet, daß Information von mehreren Standbildern kombiniert wird, um eine zusammengesetzte Information zu erhalten, die den Inhalt der mehreren Standbilder und/oder vorbestimmter Bezugsbilder reflektiert.

4. Verfahren nach Anspruch 1, 2 oder 3, dadurch

gekennzeichnet, daß dem Strömungsmittel Eichpartikel in einer bekannten Konzentration hinzugefügt werden und unabhängig von den zu analysierenden Partikeln gezählt werden.

5. Verfahren nach Anspruch 1, 2 oder 3, dadurch gekennzeichnet, daß eine Kreuzschraffur fester Abmessung im Gesichtsfeld vorgesehen ist.

6. Vorrichtung zur Durchführung des Verfahrens nach einem der Ansprüche 1 bis 5, bestehend aus:

Einrichtungen zum Zuführen von Partikel enthaltendem Strömungsmittel und Hüll-Strömungsmittel;

Abbildungseinrichtungen; und

einer Durchflußküvette bestehend aus einem Körper (10), der eine Passage (16) aufweist, die sich von einem Einlaß (12, 20) zu einem Auslaß (14) durch den Körper hindurch erstreckt, wobei der Einlaß ein Einlaßelement (24) zum Einführen des die Partikel enthaltenden Strömungsmittels und eine Einlaßöffnung (20) zur Einführung des Hüll-Strömungsmittels umfaßt, derart, daß der anfängliche Strömungsweg der Partikel in der Passage (16) durch eine Hülle aus Strömungsmittel umgeben wird, wobei die Passage zwischen dem Einlaß und dem Auslaß einen Teil (18) aufweist, der eine Untersuchung des Strömungsmittels und der Partikel in der Passage durch Abbildungseinrichtungen erlaubt, der eine Breite größer als seine Dicke hat, wobei seine Dicke so gewählt ist, daß sie größer ist als die erwartete maximale Dicke von zu untersuchenden Partikeln, wobei die Passage (16) vom Einlaß zum Eingang des Untersuchungsteils sich sowohl in einer Ebene parallel zur Breite des Untersuchungsteils als auch einer Ebene parallel zur Dicke des Untersuchungsteils verjüngt, derart, daß die Querschnittsfläche der Passage sich längs des Strömungsweges vom Strömungseinlaß zum Eingang des Untersuchungsteils merklich verringert, dadurch gekennzeichnet, daß der Körper allgemein längliche, planare Form hat mit dem Einlaß und Auslaß an je einem Ende, und daß die Passage im Untersuchungsteil auf im wesentlichen der gleichen Dicke bleibt, sich jedoch am Eingang zum Untersuchungsteil in Richtung der Breite öffnet, so daß eine flache Kammer gebildet wird, deren Breite merklich größer ist als die der Passage unmittelbar stromaufwärts von Eingang und breit genug, um das maximale Profil von mehr als einem gleichzeitig betrachteten Partikel aufzunehmen, und daß die Abbildungseinrichtung (30, 34) mit einem elektronischen Prozessor (36) verbunden ist, der so aufgebaut ist, daß er den Ausgang der Abbildungseinrichtung in eine Reihe von Standbildern umwandelt, und daß er jedes der Bilder und der Bilder von Partikeln darin analysiert.

7. Vorrichtung nach Anspruch 6, gekennzeichnet durch Controllereinrichtungen, die mit der Prozessoreinrichtung (36) gekoppelt sind, um den Zustand des Strömungsmittels als Antwort auf eine Analyse durch den Prozessor (36) zu ändern.

8. Vorrichtung nach Anspruch 6 oder 7, dadurch gekennzeichnet, daß die Abbildungseinrichtung (34) mit Einrichtungen (40) zum Speichern jeweils wenigstens eines der Standbilder in digitaler Form verbunden ist.

9. Vorrichtung nach einem der Ansprüche 6 bis 8, dadurch gekennzeichnet, daß die Breite (18) der Passage im Untersuchungsteil wenigstens das Einhundertfache der Breite der größten zu analysierenden Partikel bebrägt.

10. Durchflußküvette zur Verwendung in dem Verfahren nach einem der Ansprüche 1 bis 5 oder in einer Vorrichtung nach einem der Ansprüche 6 bis 9, bestehend aus einem Körper (10) der eine Passage (16) hat, die sich von einem Einlaß (12, 20) zu einem Auslaß (14) durch ihn hindurch erstreckt, wobei der Einlaß ein Einlaßelement (24) zur Einführung des die zu untersuchenden Partikel enthaltenden Strömungsmittels und eine Einlaßöffnung (20) zur Einführung von Hüll-Strömungsmittel aufweist, derart, daß der anfängliche Partikelstrom in der Passage von einer Strömungsmittelhülle umgeben ist, wobei die Passage zwischen dem Einlaß und dem Auslaß einen Teil (18) aufweist, der eine Untersuchung von Strömungsmittel und Partikeln in der Passage mit Abbildungseinrichungen erlaubt, wobei dieser Teil (18) eine Breite größer als seine Dicke hat, die so gewählt ist, daß sie größer ist als die erwartete maximale Dicke von zu untersuchenden Partikeln, wobei die Passage (16) sich vom Einlaß zum Eingang des Untersuchungsteils sowohl in einer Ebene parallel zur Breite des Untersuchungsteils als auch einer Ebene parallel zur Dicke des Untersuchungsteils verjüngt, derart, daß die Querschnittsfläche der Passage sich längs des Strömungsweges vom Strömungseinlaß zum Eingang des Untersuchungsteils erheblich verringert, dadurch gekennzeichnet, daß der Körper allgemein längliche, planare Form mit Einlaß und Auslaß an je einem Ende hat und daß am Untersuchungsteil die Passage auf im wesentlichen der gleichen Dicke verbleibt, sich jedoch am Eingang zum Untersuchungsteil in Richtung der Breite öffnet, so daß eine flache Kammer gebildet wird, deren Breite erheblich größer ist als die der Passage unmittelbar stromaufwärts vom Eingang, und breit genug, um das maximale Profil von mehr als einem gleichzeitig betrachteten Partikel zu enthalten.

FIG.___1.

FIG.___2.

FIG.___3.

FIG.__4.